(19) Europäisches Patentamt
European Patent Office
Office européen des brevets

(11) **EP 3 289 398 B1**

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(21) Anmeldenummer: **16720790.1**

(22) Anmeldetag: **27.04.2016**

(51) Int Cl.:
*G02B 21/14* (2006.01)    *G02B 21/36* (2006.01)
*G06T 5/50* (2006.01)

(86) Internationale Anmeldenummer:
**PCT/EP2016/059400**

(87) Internationale Veröffentlichungsnummer:
**WO 2016/174084 (03.11.2016 Gazette 2016/44)**

(54) **VERFAHREN ZUM GENERIEREN EINES REFLEXIONSREDUZIERTEN KONTRASTBILDES UND DIESBEZÜGLICHE VORRICHTUNGEN**

METHOD FOR GENERATING A REFLECTION-REDUCED CONTRAST IMAGE AND CORRESPONDING DEVICES

PROCÉDÉ DE GÉNÉRATION D'UNE IMAGE DE CONTRASTE À RÉFLEXION RÉDUITE ET DISPOSITIFS ASSOCIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2015 DE 102015208087**

(43) Veröffentlichungstag der Anmeldung:
**07.03.2018 Patentblatt 2018/10**

(73) Patentinhaber: **Carl Zeiss Microscopy GmbH 07745 Jena (DE)**

(72) Erfinder:
• **STOPPE, Lars**
**07743 Jena (DE)**
• **MILDE, Thomas**
**07616 Nausnitz (DE)**

• **WINTEROT, Johannes**
**07745 Jena (DE)**
• **HUSEMANN, Christoph**
**07747 Jena (DE)**

(74) Vertreter: **Müller, Silke**
**Carl Zeiss AG**
**Patentabteilung**
**Carl-Zeiss-Promenade 10**
**07745 Jena (DE)**

(56) Entgegenhaltungen:
EP-A1- 2 818 095         WO-A1-2015/012279
US-A1- 2014 002 723      US-A1- 2014 152 876
US-A1- 2014 198 197      US-A1- 2015 065 877
US-B1- 7 158 099

EP 3 289 398 B1

**Beschreibung**

Die vorliegende Erfindung betrifft ein Verfahren zum Generieren eines reflexionsreduzierten Kontrastbildes, insbesondere zum Ablesen von Höhenverlaufs- und/oder Phasenverlaufsinformationen einer Objektbeschaffenheit in einer vorzugsweise digitalen mikroskopischen Abbildung und diesbezügliche Vorrichtungen.

Sowohl in der klassischen biologischen Mikroskopie als auch in der Materialmikroskopie werden neben der normalen Hellfeld-Bildgebung verschiedene Formen von Kontrastverfahren verwendet, um zusätzliche Informationen über das beobachtete Objekt zu gewinnen. Beispiele hierfür sind Phasenkontrastverfahren (beispielsweise Zernike, Differentialinterferenzkontrast - DIC) oder auch alternative Bildgenerierungsverfahren (beispielsweise Dunkelfeld). Aktuell werden Varianten beschrieben, wie Kontrastbilder aus Einzelbildern berechnet werden können. In den bisherigen Veröffentlichungen werden dabei DIC-Alternativen beschrieben, wobei dies in der Regel zu grauen Bildern führt und wobei die Qualität der berechneten Kontrastbilder stark richtungsabhängig ist. Im Allgemeinen haben alle beschriebenen Kontraste den Nachteil, dass sie eine spezielle Eigenschaft des Objekts hervorheben, dafür jedoch andere Eigenschaften ignorieren beziehungsweise abschwächen. Beispielsweise haben DIC-Verfahren beziehungsweise das digitale Analogon der Bildung der Differenz von Bildern gegenüberliegender Beleuchtungsrichtungen (DPC) den Nachteil, dass sie lediglich richtungsabhängige Grauwertbilder generieren.

Ferner kann es bei einer Bildaufnahme mit einem optischen System mit Beleuchtung zu unerwünschten Reflexen kommen, welche auf der Wechselwirkung zwischen Beleuchtung, Objekt und System beruhen, und welche die Bildaufnahme beziehungsweise den Bildeindruck verschlechtern. Wichtige Details des Bildes können durch solche Reflexe verlorengehen. Diese Reflexe können zwei verschiedene Gründe haben: Zum einen eine Bildreflexion, welche durch eine Mehrfachreflexion innerhalb des optischen Systems auftritt (Systemreflexe), und zum Anderen eine Bildreflexion durch hohe Reflektivität des zu untersuchenden Objekts in spezielle Richtungen, insbesondere bei Auflicht-Beleuchtung.

Im Stand der Technik wird teilweise versucht, auftretende Reflexe digital mittels einer Bildnachbearbeitung zu korrigieren, indem beispielsweise ein Anstieg eines Helligkeitsunterschiedes in einem Bildteil des abgebildeten Objektes kompensiert wird oder indem mittels mathematischer Modelle die Reflex-Beschaffenheit des Objektes modelliert wird und versucht wird, die dadurch erhaltenen Reflexionen aus dem Bild herauszurechnen. Diese Nachbearbeitungsverfahren haben den Nachteil, dass sie in dem Bild auftretende Reflexionen nur in speziellen Fällen weitgehend entfernen können. Ein weiterer Nachteil kann dabei sein, dass das abgebildete Objekt dabei verfälscht werden kann.

US 2014/002723 A1 offenbart dazu eine Methode der Bildverbesserung zur Dämpfung, Trennung und Reduzierung der Reflexion von Objektes, wobei ein reflexionskorrigiertes Illuminationsbild erstellt wird. Dabei ist eine Bestimmung von Höhenverlaufsinformationen einer Objektbeschaffenheit nicht möglich.

In US 7,136,537 wird ein Verfahren offenbart, bei dem Bilder mit und ohne Reflektionen überblendet werden, um Spiegelreflektionen aus dem Bild herauszurechnen und darunterliegende Informationen zu erkennen.

Die WO 2015/012279 A1 betrifft ein Bildverarbeitungsgerät und ein Verfahren zur Korrektur von Abschattungen in Bilder, wobei ein Illuminationsbild mit einem bezüglich einer ersten Achse benachbarten Illuminationsbild und mit einem bezüglich einer zweiten Achse benachbarten Illuminationsbild überlagert werden, um so eine Bildverbesserung zu erreichen.

US 2015/065877 A1 lehrt schließlich ein Verfahren und eine Vorrichtung zur Erzeugung von Ultraschallbildern, bei dem Ultraschallbilder aus einem Volumen und weitere Ultraschallbilder aus einer Ebene überlagert werden, um ein Bild eines Objektes zu erzeugen. Dabei sind Höhenverlaufsinformationen farbcodiert darstellbar, jedoch nicht Richtungsinformationen zum Höhenverlauf.

Daher wäre es wünschenswert, eine Möglichkeit bereitzustellen, welche ein richtungsabhängiges Farbcodieren einer Objektbeschaffenheit eines Objektes erlaubt, insbesondere von Höhenverlaufs- und/oder Phasenverlaufsinformationen der Objektbeschaffenheit, wobei durch die Beleuchtung des Objektes auftretende Reflexe in der mikroskopischen Aufnahme schnell und zuverlässiger entfernt werden können, damit die zur Darstellung benötigten Kontraste besser darstellbar werden.

Es ist Ziel der Erfindung, eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens gemäß dem Hauptanspruch, sowie mittels Vorrichtungen gemäß der nebengeordneten Ansprüche.

Der Gegenstand des Hauptanspruches betrifft dabei ein reflexionsreduziertes Kontrastbildungsverfahren zum Generieren eines reflexionsreduzierten Kontrastbildes, vorzugsweise aus mikroskopischen Abbildungen (z.B. eines Digitalmikroskopes), insbesondere zum Ablesen von Höhen- und/oder Phasenverlaufsinformationen einer Objektbeschaffenheit, folgende Schritte in folgender Reihenfolge umfassend:

- Illuminieren eines Objektes mittels einer Illuminationssequenz. Dabei erfolgt das Illuminieren des Objektes mittels einer oder einer Vielzahl (zwei oder mehr) an Illuminationsquellen. In der Illuminationssequenz illuminiert jede Illuminationsquelle das Objekt einzeln.

- Erstellen eines Illuminationsbildes des Objektes für jede Illumination des Objektes der Illuminationssequenz.

- Ermitteln eines reflexionskorrigierten Illuminationsbildes für jedes Illuminationsbild, jeweils mittels eines geeigneten Überlagerns des entsprechenden Illuminationsbildes mit einem bezüglich einer ersten Achse benachbarten Illuminationsbildes und mit einem bezüglich einer zweiten Achse benachbarten weiteren Illuminationsbildes.

- Überlagern jeweils zweier bezüglich der ersten Achse benachbarter reflexionskorrigierter Illuminationsbilder zu einem ersten Gesamtachsenbild der ersten Achse.

- Überlagern jeweils zweier bezüglich der zweiten Achse benachbarter reflexionskorrigierter Illuminationsbilder zu einem zweiten Gesamtachsenbild der zweiten Achse.

- Erstellen eines ersten Farbverlaufsbildes basierend auf dem ersten Gesamtachsenbild.

- Erstellen eines zweiten Farbverlaufsbildes basierend auf dem zweiten Gesamtachsenbild.

- Transformieren des ersten Farbverlaufsbildes und des zweiten Farbverlaufsbildes in einen Farbraum. Und

- Generieren eines Kontrastbildes, basierend auf dem transformierten ersten Farbverlaufsbild und dem zweiten Farbverlaufsbild in den Farbraum derart, dass vier Richtungsinformationen eines Höhenverlaufes einer

Beschaffenheit des Objektes farbcodiert darstellbar sind. Die Verfahrensschritte können dabei automatisiert ausgeführt werden.

Eine Höhenverlaufsinformationen einer Objektbeschaffenheit im Sinne der Erfindung kann dabei eine Information aufweisen, welche Hinweise über eine Objektbeschaffenheit in allen drei Raumdimensionen gibt.

Eine Illuminationssequenz im Sinne der Erfindung kann dabei eine konkrete Folge von Illuminationen sein. Dazu kann jeweils eine Illuminationsquelle aktiviert werden, wobei die restlichen Illuminationsquellen inaktiv sind.

Eine Illuminationsquelle im Sinne der Erfindung kann dabei eine Lichtquelle sein, um das Objekt zu beleuchten. Durch die Anordnung mehrerer solcher Illuminationsquellen um das Objekt, kann somit eine winkelselektive Beleuchtung des Objektes erreicht werden. Beispielsweise kann die Illuminationsquelle eine an einem Objektiv angeordnete Ringlichtbeleuchtung mit mehreren Einzellichtquellen (z.Bsp. LED's) sein, mit denen eine Beleuchtung des Objektes aus den verschiedenen Quadranten (Nord-Ost-Süd-West) oder verschiedenen Einzel-LED's (N-NO-O-SO-S-SW-W-NW) in vorgegebener Reihenfolge einzeln oder kombiniert realisiert werden kann.

Ein Illuminationsbild im Sinne der Erfindung kann dabei eine Aufnahme eines Objektes innerhalb der Illuminationssequenz sein.

Ein Überlagern des entsprechenden Illuminationsbildes mit einem bezüglich einer Achse benachbarten Illuminationsbildes im Sinne der Erfindung kann dabei ein Vorgang sein, bei welchem jeweils gleiche Bildanteile zweier Bilder verstärkt oder abgeschwächt werden. Die kann beispielsweise pixelweise erfolgen.

Ein Gesamtachsenbild im Sinne der Erfindung kann dabei ein Bild sein, welches durch Überlagern beziehungsweise Kombinieren von Illuminationsbildern entsteht. Dabei können diejenigen Illuminationsbilder herangezogen werden, welche jeweils bezüglich der gleichen Achse benachbart sind.

Ein Farbverlaufsbild im Sinne der Erfindung kann dabei ein Bild sein, welches entsteht, wenn über ein Gesamtachsenbild ein entsprechender Farbverlauf gelegt wird. Beispielsweise kann in einem kartesischen Koordinatensystem für die x-Achse ein erster Farbverlauf, wie beispielsweise ein blau-gelb Verlauf gelegt werden, und für die y-Achse ein weiterer Farbverlauf, beispielsweise ein rot-grün Verlauf gelegt werden. Das Farbverlaufsbild des x-Achsen Gesamtachsenbildes würde dann einen blau-gelb Farbverlauf aufweisen. Dieser Farbverlauf kann dann indikativ sein für einen Höhenverlauf des Objektes in der horizontalen Achse, während dann der Farbverlauf des Farbverlaufsbildes des y-Achsen Gesamtachsenbildes indikativ sein kann für einen Höhenverlauf des Objektes in der vertikalen Achse. Insbesondere kann ein Farbverlauf auch ein Kontrast sein. Ist der Farbverlauf ein Kontrast, so kann der Höhenverlauf der Beschaffenheit des Objektes farbcodiert darstellbar werden, indem eine Helligkeitsinformation als Farbcodierung verwendet wird, wobei die Helligkeit im Bild beziehungsweise die Helligkeit des Pixels die Höheninformation darstellt.

Ein Farbraum im Sinne der Erfindung kann dabei ein digital festgelegter Farbraum sein, wie er beispielsweise für Computerbildschirme und/oder im Print-Bereich eingesetzt wird. Ein reflexionskorrigiertes Illuminationsbild im Sinne der Erfindung kann dabei ein Bild sein, welches um darin auftretenden Reflexionen korrigiert ist.

Durch die erfindungsgemäße Lehre wird der Vorteil erreicht, dass sowohl eine Information über die Materialbeschaffenheit als auch eine Höhen- und/oder Phasenverlaufsinformation des Objektes in einem Bild reflexionskorrigiert dargestellt werden können. Ferner kann das Objekt in Originalfarben dargestellt werden und über die Helligkeit kann eine räumliche Zuordnung erreicht werden. Somit kann auf einfache und schnelle Weise eine Kombination von Einzelkontrasten in einem Einzelbild erreicht werden, um mehr Informationen über das Objekt in dem Objektbild darzustellen.

Der Gegenstand eines nebengeordneten Anspruches betrifft dabei eine reflexionsreduzierend-kontrastbildende Vorrichtung zur Generierung eines Kontrastbildes, vorzugsweise aus mikroskopischen Abbildungen, insbesondere zum Ablesen von Höhenverlaufsinformationen einer Objektbeschaffenheit, besonders bevorzugt zum Lichtmikroskopieren, die reflexionsreduzierend-kontrastbildende Vorrichtung aufweisend eine Bildaufnahmevorrichtung und eine Reflexionsreduzier-Kontrastbildungsvorrichtung. Dabei ist die Bildaufnahmevorrichtung dazu eingerichtet, ein Bild eines Objektes zu erfassen und an die Reflexionsreduzier-Kontrastbildungsvorrichtung zu übermitteln. Und dabei ist die Reflexionsreduzier-Kontrastbildungsvorrichtung dazu eingerichtet, ein erfindungsgemäßes reflexionsreduziertes Kontrastbildungsverfahren auszuführen.

Eine Bildaufnahmevorrichtung im Sinne der Erfindung kann dabei eine Vorrichtung sein, welche geeignet ist, ein Objekt abzutasten und optisch darzustellen. Insbesondere kann eine Bildaufnahmevorrichtung ein Mikroskop sein, besonders bevorzugt ein Lichtmikroskop. Ferner kann die Bildaufnahmevorrichtung eine Mehrzahl an Illuminationsquellen zur winkelselektiven Beleuchtung des abzubildenden Objektes aufweisen.

Ein Reflexionsreduzier-Kontrastbildungsvorrichtung im Sinne der Erfindung kann dabei eine Vorrichtung aufweisen, welche dazu eingerichtet ist, Kontraste aus Bildern, welche durch die Beleuchtung des Objektes bei der Bildaufnahme entstehen, zu erzeugen und dabei entstehende Reflexionen zu korrigieren. Die Reflexionsreduzier-Kontrastbildungsvorrichtung kann hierzu eine CPU und eine zugehörige Architektur aufweisen. Insbesondere kann die Reflexionsreduzier-Kontrastbildungsvorrichtung in eine Bildverarbeitungseinheit des Mikroskops integriert oder ein entsprechend eingerichteter Computer sein.

Durch die erfindungsgemäße Lehre wird der Vorteil erreicht, dass kostengünstig eine Vorrichtung bereitgestellt werden kann, welche es ermöglicht, ein Objekt winkelselektiv zu beleuchten, dabei eine Mehrzahl von Bildern zu erfassen und eine Kombination von Einzelkontrasten der erfassten Bilder in einem Einzelbild zu erreichen, um mehr Informationen über das Objekt in dem Objektbild darzustellen, wobei die aufgenommenen Bilder um die bei der Aufnahme entstehende Reflexionen korrigiert werden können.

Der Gegenstand eines weiteren nebengeordneten Anspruches betrifft dabei ein Computerprogrammprodukt für eine erfindungsgemäße reflexionsreduzierend-kontrastbildende Vorrichtung, welche nach einem erfindungsgemäßen reflexionsreduzierten Kontrastbildungsverfahren betreibbar ist. Das Computerprogramm umfasst Programmcodemittel, in denen die Schritte des erfindungsgemäßen Reflexreduzier-Kontrastbildungsverfahrens mittels einer Bildverarbeitung implementiert sind. Das Computerprogramm kann in einer Echtzeit-Bildverarbeitungseinheit als Hardwarecode implementiert sein, oder alternativ als reine Bildnachverarbeitung ausgeführt sein.

Bei der vorteilhaften Integration des Programmcodes für das Reflexreduzier-Kontrastbildungsverfahren in die Hardware (Digitale Bildverarbeitungseinheit eines Lichtmikroskopes) kann eine sehr schnelle Bildverarbeitung erfolgen und das Ergebnis quasi als "Live"-Bild betrachtet werden, da die Aufnahme der Einzelbilder und deren Bildverarbeitung schneller erfolgt als die Wiedergabefrequenz des Live-Bildes.

Durch die erfindungsgemäße Lehre wird der Vorteil erreicht, dass damit das reflexionsreduzierte Kontrastbildungsverfahren automatisiert betreibbar ist und auf einfache und kostengünstige Weise, für entsprechende, verschiedene erfindungsgemäße Vorrichtungen bereitgestellt werden kann. Besonders vorteilhaft ist das Computerprogrammprodukt in die Bildverarbeitungseinheit des Mikroskopes integriert bzw. integrierbar. Es kann auch als Hardwarecode in die Bildverarbeitungshardware integriert sein.

Der Gegenstand eines weiteren nebengeordneten Anspruches betrifft dabei einen Datenträger aufweisend ein erfindungsgemäßes Computerprogrammprodukt.

Durch die erfindungsgemäße Lehre wird der Vorteil erreicht, dass damit das reflexionsreduzierte Kontrastbildungsverfahren automatisiert betreibbar ist und auf einfache und kostengünstige Weise, für entsprechende, verschiedene erfindungsgemäße Vorrichtungen bereitgestellt werden kann und dabei einfach transportiert werden kann, um das Verfahren direkt auf die entsprechende erfindungsgemäße Vorrichtung, am Ort der Vorrichtung portieren zu können.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mitumfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist in dem reflexionsreduzierten Kontrastbildungsverfahren das Überlagern jeweils zweier bezüglich der ersten Achse benachbarter reflexionskorrigierter Illuminationsbilder zu dem ersten Gesamtachsenbild der ersten Achse, und das Überlagern jeweils zweier bezüglich der zweiten Achse benachbarter reflexionskorrigierter Illuminationsbilder zu dem zweiten Gesamtachsenbild der zweiten Achse jeweils entsprechend auf: Verrechnen jeweils zweier bezüglich der entsprechenden ersten Achse beziehungsweise zweiten Achse benachbarter reflexionskorrigierter Illuminationsbilder zu entsprechenden Zwischenbildern bezüglich der entsprechenden ersten Achse beziehungsweise zweiten Achse. Und verrechnen der entsprechenden Zwischenbilder zu einem entsprechenden ersten Gesamtachsenbild beziehungsweise einem zweiten Gesamtachsenbild. Dabei weist das jeweilige Verrechnen eine Addition oder eine Subtraktion auf. Dabei kann aber auch zusätzlich eine Skalierung, Bildfilterung oder eine andersartige Bildbearbeitung an den Einzelbildern ausgeführt werden - vor und/oder nach der Addition bzw. Subtraktion. Diese Ausgestaltung weist den Vorteil auf, dass damit ein Verfahrensteil wiederholt angewendet werden kann, um das entsprechende Gesamtachsenbild zu erhalten. Dadurch kann das Verfahren vereinfacht werden.

Entsprechend einer weiteren exemplarischen Ausgestaltung weist das reflexionsreduzierte Kontrastbildungsverfahren ferner auf, dass das Überlagern der entsprechenden reflexionskorrigierten Illuminationsbilder zu dem ersten Gesamtachsenbild der ersten Achse beziehungsweise zu dem zweiten Gesamtachsenbild der zweiten Achse, jeweils eine entsprechende Graubildtransformation aufweist.

Diese Ausgestaltung weist den Vorteil auf, dass damit das Gesamtachsenbild transformiert werden kann, derart, dass nicht benötigte Farbinformationen weggelassen werden, um das Gesamtachsenbild auf einfache Weise für andere Informationen verwenden zu können.

Entsprechend einer weiteren exemplarischen Ausgestaltung weist in dem reflexionsreduzierten Kontrastbildungsverfahren das Transformieren des ersten Farbverlaufsbildes und des zweiten Farbverlaufsbildes in den Farbraum auf: Zuweisen des ersten Farbverlaufsbildes zu einem ersten bildgebenden Kanal des Farbraumes. Und zuweisen des zweiten Farbverlaufsbildes zu einem zweiten bildgebenden Kanal des Farbraumes.

Ein bildgebender Kanal des Farbraumes im Sinne der Erfindung kann dabei ein Kanal des Farbraumes sein, welcher zur visuellen Darstellung genutzt wird. Der RGB-Farbraum beispielsweise weist drei bildgebende Kanäle auf, den R-Kanal, den G-Kanal und den B-Kanal, auf welchem unterschiedliche Farben kodiert sind.

Diese Ausgestaltung weist den Vorteil auf, dass die bildgebenden Kanäle des Farbraumes selbst, zur Informationsführung über die Objektbeschaffenheit genutzt werden können.

Entsprechend einer weiteren exemplarischen Ausgestaltung weist in dem reflexionsreduzierten Kontrastbildungsverfahren das Transformieren des ersten Farbverlaufsbildes und des zweiten Farbverlaufsbildes in den Farbraum ein Zuweisen einer Helligkeitsinformation zu einem dritten bildgebenden Kanal des Farbraumes auf.

Diese Ausgestaltung weist den Vorteil auf, dass mittels der Helligkeitsinformation das Bild normiert werden kann oder auch dazu benutzt werden kann, eine weitere Information über die Objektbeschaffenheit im Farbraum darzustellen.

Entsprechend einer weiteren exemplarischen Ausgestaltung weist in dem reflexionsreduzierten Kontrastbildungsverfahren das Transformieren des ersten Farbverlaufsbildes und des zweiten Farbverlaufsbildes in den Farbraum ein Zuweisen eines Grauwertbildes zu einem dritten bildgebenden Kanal des Farbraumes auf.

Ein Grauwertbild im Sinne der Erfindung kann dabei eine Schwarz-weiß Verlaufsinformation des Bildes sein. Das Grauwertbild kann auch einen Kontrast aufweisen.

Diese Ausgestaltung weist den Vorteil auf, dass mittels des Grauwertbildes das Bild normiert werden kann oder auch dazu benutzt werden kann, eine weitere Information über die Objektbeschaffenheit im Farbraum darzustellen.

Entsprechend einer weiteren exemplarischen Ausgestaltung weist das reflexionsreduzierte Kontrastbildungsverfahren ferner ermitteln eines reflexionskorrigierten Gesamtilluminationsbildes auf, mittels eines geeigneten Überlagerns zumindest eines überwiegenden Teiles der reflexionskorrigierten Illuminationsbilder. Und dabei basiert das Grauwertbild auf einer Grauwerttransformation des reflexionskorrigierten Gesamtilluminationsbildes.

Diese Ausgestaltung weist den Vorteil auf, dass damit Reflexe noch besser ausgefiltert werden können.

Entsprechend einer weiteren exemplarischen Ausgestaltung weist das reflexionsreduzierte Kontrastbildungsverfahren ferner auf, dass zwei Richtungsinformationen der vier Richtungsinformationen indikativ für jeweils eine Richtung entlang der ersten Achse sind. Und ferner weist das Kontrastbildungsverfahren auf, dass zwei weitere Richtungsinformationen der vier Richtungsinformationen indikativ für jeweils eine Richtung entlang der zweiten Achse sind.

Diese Ausgestaltung weist den Vorteil auf, dass eine Höhenverlaufsinformationen der Objektbeschaffenheit auf einfache Weist im Farbraum darstellbar wird, indem die Richtungen der Achsen, welche für die Generierung des Gesamtachsenbildes genutzt werden, auch für die Höhenverlaufsinformationen genutzt werden.

Entsprechend einer weiteren exemplarischen Ausgestaltung weist das reflexionsreduzierte Kontrastbildungsverfahren ferner auf, dass der Farbraum ein CIELAB Farbraum, ein additiver Farbraum, ein subtraktiver Farbraum oder ein Hue-Saturation Farbraum ist.

Ein CIELAB Farbraum im Sinne der Erfindung kann dabei alle wahrnehmbaren Farben beschreiben. Zu den wichtigsten Eigenschaften des CIELAB-Farbmodells zählen die Geräteunabhängigkeit und die Wahrnehmungsbezogenheit. Das bedeutet, dass Farben unabhängig von der Art ihrer Erzeugung oder Wiedergabetechnik so definiert werden, wie sie von einem Normalbeobachter bei einer Standard-Lichtbedingung wahrgenommen werden. Das Farbmodell ist in der EN ISO 11664-4 definiert.

Ein additiver Farbraum im Sinne der Erfindung kann dabei bedeuten, dass die Änderung des vom Auge empfundenen Farbeindrucks durch sukzessives Hinzufügen eines jeweils anderen Farbreizes erfolgt. Grundsätzlich ist das Farbsehen mit Hilfe unterschiedlich farbempfindlicher Sensoren im Auge eine additive Mischung. Da die additive Farbmischung in Auge und Gehirn stattfindet, wird sie auch physiologische Farbmischung genannt. Ein additiver Farbraum kann beispielsweise der RGB-Farbraum sein.

Ein subtraktiver Farbraum im Sinne der Erfindung kann dabei die Änderung eines Farbreizes bei Reflexion von der Oberfläche eines Körpers durch Remission oder beim Durchgang durch ein Medium (Farbfilter) durch Transmission bezeichnen. Im engeren Sinne versteht man unter subtraktiver Farbmischung jenes extreme Prinzip, bei dem durch Hintereinanderschalten von drei Farbfiltern die Vielfalt des Farbenraums reproduziert wird. Beispielsweise können der CMY-Farbraum oder der CMYK-Farbraum ein subtraktiver Farbraum sein.

Ein Hue-Saturation Farbraum im Sinne der Erfindung kann dabei ein Farbraum sein, bei denen man die Farbe mit Hilfe des Farbwerts (englisch hue), der Farbsättigung (saturation) und des Hellwerts (oder der Dunkelstufe) (value) definiert. Dieser wird auch HSV-Farbraum genannt. Ähnliche Definitionen führen zu einem HSL-Farbraum mit der relativen Helligkeit (lightness), einem HSB-Farbraum mit der absoluten Helligkeit (brightness) und einem HSI-Farbraum mit der Lichtintensität (intensity).

Diese Ausgestaltung weist den Vorteil auf, dass gut definierte und weit verbreitete Farbräume verwendet werden können, wodurch der Entwicklungsaufwand verringert werden kann, was zu einer Kosteneinsenkung führen kann.

Entsprechend einer weiteren exemplarischen Ausgestaltung weist das reflexionsreduzierte Kontrastbildungsverfahren ferner auf, dass das Generieren des Kontrastbildes in Abhängigkeit des Farbraumes erfolgt.

Diese Ausgestaltung weist den Vorteil auf, dass in Abhängigkeit des Farbraumes entschieden werden kann, welche Objektinformationen wie farbcodiert dargestellt werden sollen.

Entsprechend einer weiteren exemplarischen Ausgestaltung weist das reflexionsreduzierte Kontrastbildungsverfahren ferner auf, dass nach Abschluss der Illuminationssequenz jede Illuminationsquelle das Objekt einmal illuminiert hat.

Dabei kann das Kontrastbildungsverfahren ferner aufweisen, dass nach Abschluss der Illuminationssequenz jede Illuminationsquelle das Objekt genau einmal illuminiert hat. Diese Ausgestaltung weist den Vorteil auf, dass das Objekt von allen verfügbaren Richtungen illuminiert wird, um die entsprechenden Objektinformationen von allen verfügbaren Illuminationsrichtungen zu erhalten.

Entsprechend einer weiteren exemplarischen Ausgestaltung weist das reflexionsreduzierte Kontrastbildungsverfahren ferner auf, dass in der Illuminationssequenz jede Illuminationsquelle das Objekt einzeln illuminiert.

Diese Ausgestaltung weist den Vorteil auf, dass das Objekt nur so oft belichtet werden muss, wie notwendig und dass nur die minimal benötigte Anzahl an Illuminationsbildern erstellt werden muss, um die gewünschten Objektinformationen dazustellen.

Entsprechend einer weiteren exemplarischen Ausgestaltung weist für das reflexionsreduzierte Kontrastbildungsverfahren das Objekt auf, dass es ein diffus reflektierendes Objekt ist. Diese Ausgestaltung weist den Vorteil auf, dass das Verfahren auf Objekte anwendbar ist, welche keine expliziten Vorzugsrichtungen für die Reflexion aufweisen.

Die Erfindung erlaubt es somit ein Verfahren und zugehörige Vorrichtungen bereitzustellen, wodurch es ermöglicht wird, mittels winkelselektiver Beleuchtung, verschiedene Eigenschaften eines entsprechenden Objektes darzustellen. Dies kann beispielsweise erfolgen mittels:

- DPC - Differenz von Bildern gegenüberliegender Beleuchtungsrichtungen → Phasengradienten (BIO) bzw. Höhenprofilgradienten (MAT)
- SEC - Sum-Enhanced-Contrast: Summe aller Einzelbilder + Betrag (DPCx- Differenz gegenüberliegender Bilder in x-Richtung) + Betrag(DPCy-Differenz gegenüberliegender Bilder in y-Richtung) → Summe der Beträge der Anstiege und PK-Bild überlagert → keine direkte Einzelinformation ablesbar, aber gleichzeitige Visualisierung verschiedener Effekte
- DEC - Difference-Enhanced-Contrast: Summe aller Einzelbilder - Betrag (DPCx) - Betrag(DPCy) → Differenz des PK-Bildes und der Beträge der Anstiege → keine direkte Einzelinformation ablesbar, aber gleichzeitige Visualisierung verschiedener Effekte
- MSC - Mean-Sum-Contrast: Summe aller Differenzen der Beträge der Einzelbilder mit ihren Mittelwerten → keine Richtungsinformation - extreme Werte werden hervorgehoben
  Die Begriffe bzw. Abkürzungen SEC, DEC und MSC sin in dieser Anmeldung wie beschrieben definiert.
  Nun nutze verschiedene Kontraste und die Summe der Einzelbilder (PK), um mittels spezieller Farbraumzuordnungen mehrere Informationen gleichzeitig zu kodieren.
- HSV-Farbkontrast: Speziell die Tatsache, dass die DIC / DPC-Kontraste die Information über die Materialfarbe nicht darstellen, ist problematisch. Deshalb ist folgende Kombination möglich:

  - Nehme das PK-Bild

- Transformiere es von RGB in den HSV-Farbraum

- Ersetze den V-Kanal (Value) durch ein Grauwertbild des gewünschten Einzelkontrastes (beispielsweise DICx)

- Transformiere das Bild zu RGB zurück

- Führe gegebenenfalls eine Helligkeitsanpassung durch

- Das Ergebnis hat nun dieselbe Farbe wie das Original, enthält in der Helligkeit aber die Informationen des Einzelkontrasts (beispielsweise einen Anstieg in x-Richtung)

- LAB-Farbkontrast: Störend ist ebenfalls, dass man die Richtungsinformation des Phasengradienten in DIC/DPC nur in eine Richtung visualisieren kann. Folgende Transformation löst dieses Problem:

- Nutze das PK-Bild

- Transformiere es in den Lab-Farbraum

- Ersetze die a- und b-Kanäle mit den gewünschten Einzelkontrasten (beispielsweise DPCx, DPCy)

- Transformiere das Bild zurück in den RGB-Farbraum

- Das Ergebnis hat dieselben Helligkeitswerte wie das Ursprungsbild (PK) aber die Informationen der beiden Einzelkontraste sind in a beziehungsweise b gespeichert
Beispielsweise bei DPCx und DPCy werden so alle Anstiegsrichtungen dargestellt und gleichzeitig farbkodiert

- RGB-Farbkontrast:

- Schreibe in die RGB-Farbkanäle drei verschiedene Einzelkontraste (beispielsweise PK, DPCx, DPCy)
- Das Ergebnis kodiert farblich alle drei Kontrastinformationen
Dadurch wird der Vorteil generiert, dass eine einfache und schnelle Kombination von Einzelkontrasten in einem Einzelbild ermöglicht werden kann. Ferner ist das Verfahren informationserhaltend (Farbe/Helligkeit) bei HSV und LAB.

Ferner wird es möglich, eine optimale Ausleuchtung eines Objektes zur Bildaufnahme des Objektes zur Verfügung zu stellen, und das Objekt dabei weitestgehend ohne durch die Beleuchtung entstehende Reflexe optisch darzustellen.
Dadurch werden Kontraste auch auf reflektierenden Proben ermöglicht. Ferner können die beleuchtungsrichtungssensitiven Reflexe unterdrückt werden. Zudem entstehen keine unnatürlichen Artefakte. Das Verfahren wird somit nutzbar sowohl für richtungsselektive koaxiale Beleuchtung als auch für außeraxiale Beleuchtungen, wie beispielsweise in einem Dunkelfeld.
Das Objekt wird aus verschiedenen Richtungen beleuchtet. Zu jeder Beleuchtungsrichtung wird ein Intensitätsbild aufgenommen. Zur Erzielung einer Einzelbild-Reflexkorrektur wird nun kein Gesamtreflex errechnet, sondern jedes einzelne Bild wird für sich Reflexkorrigiert.
Das reflexkorrigierte Einzelbild errechnet sich nun wie folgt:

$$I_k^{corrected} = I_k - \frac{\sum_{j \in N(k)} max(0, I_k - I_j)}{m}$$

Wobei N(k) die Menge der zu k direkt benachbarten Beleuchtungsmuster ist und m die Anzahl aller Nachbarbeleuchtungsmuster N(k) angibt.
Das Prinzip dahinter ist, dass Bilder benachbarter Beleuchtungsrichtungen immer ähnliche Bilder des Objekts zeigen, wobei die Reflexe in der Regel stark beleuchtungsrichtungsabhängig sind. Dadurch bleiben bei der Differenzbildung innerhalb des Bruchs auf der rechten Seiten die Reflexe übrig. Durch die Maximumsbildung mit 0, die Summe und die Normierung mit m werden anschließend die Reflexe so normiert, dass man sie vom Einzelbild direkt abziehen kann. Das Ergebnisbild enthält anschließend keine oder fast keine direkten Reflexe mehr.
Dies wird anschließend mit allen Einzelbildern durchgeführt und die so entstandenen korrigierten Einzelbilder werden für die Kontrastbilderstellung verwendet. Dabei können sie vorher noch durch Bildverarbeitung verbessert werden (eventueller Helligkeitsausgleich, etc.).

Man kann die Reflexentfernung auch direkt in die Formel der Berechnung des Kontrast einsetzen. Beispielsweise ergibt sich der Richtungskontrast in x-Richtung als:

$$DPC_x = \sum_{j \in HK_x} \left( I_j - \frac{\sum_{k \in N(j)} \max(0, I_j - I_k)}{m} - I_{\tilde{j}} + \frac{\sum_{\tilde{k} \in N(\tilde{j})} \max(0, I_{\tilde{j}} - I_{\tilde{k}})}{\tilde{m}} \right)$$

Beziehungsweise mit Amplitudennormierung ergibt sich:

$$DPC_x = \frac{\sum_{j \in HK_x} \left( I_j - \frac{\sum_{k \in N(j)} \max(0, I_j - I_k)}{m} - I_{\tilde{j}} + \frac{\sum_{\tilde{k} \in N(\tilde{j})} \max(0, I_{\tilde{j}} - I_{\tilde{k}})}{\tilde{m}} \right)}{\sum_{j \in HK_x} \left( I_j - \frac{\sum_{k \in N(j)} \max(0, I_j - I_k)}{m} + I_{\tilde{j}} - \frac{\sum_{\tilde{k} \in N(\tilde{j})} \max(0, I_{\tilde{j}} - I_{\tilde{k}})}{\tilde{m}} \right)}$$

Dabei ist $HK_x$ die Menge aller Beleuchtungsrichtungen auf einem Halbkreis der Beleuchtungspupille in x-Richtung und alle $\tilde{j}$ die zu j gegenüberliegende Beleuchtungsrichtung (auf dem anderen Halbkreis).

Ferner können die reflexkorrigierten Einzelbilder beziehungsweise die reflexkorrigierten Kontraste genutzt werden, um Farbkontraste zu erzeugen, die entweder den RGB-Wert einer Probe mit einer lokalen Objekt-Anstiegsinformation kombiniert (HSV) beziehungsweise Kontraste verschiedener Orientierung und die Helligkeitsinformation des Objekts miteinander kombiniert (LAB beziehungsweise RGB).

Natürlich kann man die Reflexkorrektur auch direkt in die Berechnung integrieren:

HSV (x) - hue, saturation, value

$$H = hue \left( \sum_{k=1}^{n} \left( I_k - \frac{\sum_{j \in N(k)} max(0, I_k - I_j)}{m} \right) \right)$$

$$S = saturation \left( \sum_{k=1}^{n} \left( I_k - \frac{\sum_{j \in N(k)} max(0, I_k - I_j)}{m} \right) \right)$$

$$V = \sum_{j \in HK_x} \left( I_j - \frac{\sum_{k \in N(j)} \max(0, I_j - I_k)}{m} - I_{\tilde{j}} + \frac{\sum_{\tilde{k} \in N(\tilde{j})} \max(0, I_{\tilde{j}} - I_{\tilde{k}})}{\tilde{m}} \right)$$

LAB - Helligkeit, Wert zwischen Rot und Grün, Wert zwischen Blau und Gelb

$$L = helligkeit \left( \sum_{k=1}^{n} \left( I_k - \frac{\sum_{j \in N(k)} max(0, I_k - I_j)}{m} \right) \right)$$

$$A = \sum_{j \in HK_x} \left( I_j - \frac{\sum_{k \in N(j)} \max(0, I_j - I_k)}{m} - I_{\tilde{j}} + \frac{\sum_{\tilde{k} \in N(\tilde{j})} \max(0, I_{\tilde{j}} - I_{\tilde{k}})}{\tilde{m}} \right)$$

$$B = \sum_{j \in HK_y} \left( I_j - \frac{\sum_{k \in N(j)} \max(0, I_j - I_k)}{m} - I_j + \frac{\sum_{\tilde{k} \in N(j)} \max(0, I_j - I_{\tilde{k}})}{\tilde{m}} \right)$$

Prinzipiell lassen sich die Kontraste auch in anderen Farbräumen mischen (CMY,CMYK und andere).

Die Erfindung wird nachfolgend eingehender an Hand der Figuren erläutert werden. In diesen zeigen:

Fig. 1 eine schematische Darstellung eines vorgeschlagenen Verfahrens gemäß einer beispielhaften Ausgestaltung der Erfindung;

Fig. 2 eine schematische Darstellung eines vorgeschlagenen Verfahrens gemäß einer weiteren beispielhaften Ausgestaltung der Erfindung;

Fig. 3 eine schematische Darstellung eines vorgeschlagenen Verfahrens gemäß einer weiteren beispielhaften Ausgestaltung der Erfindung;

Fig. 4 eine schematische Darstellung eines vorgeschlagenen Verfahrens gemäß einer weiteren beispielhaften Ausgestaltung der Erfindung;

Fig. 5 eine schematische Darstellung eines vorgeschlagenen Verfahrens gemäß einer weiteren beispielhaften Ausgestaltung der Erfindung;

Fig. 6 eine schematische Darstellung eines vorgeschlagenen Verfahrens gemäß einer weiteren beispielhaften Ausgestaltung der Erfindung; und

Fig. 7 eine schematische Darstellung einer vorgeschlagenen Vorrichtung gemäß einer weiteren beispielhaften Ausgestaltung der Erfindung.

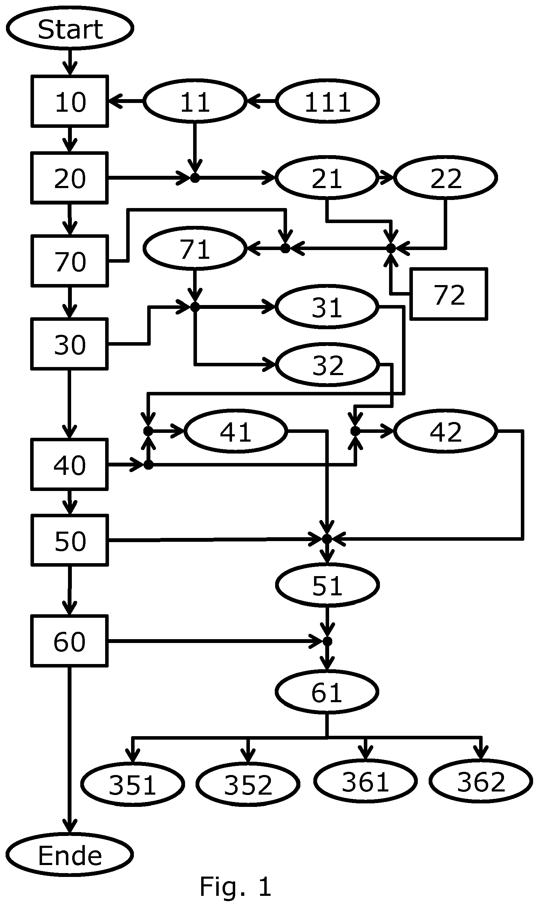

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines reflexionsreduzierten Kontrastbildungsverfahrens zum Generieren eines reflexionsreduzierten Kontrastbildes, vorzugsweise aus digitalen mikroskopischen Abbildungen, insbesondere zum Ablesen von Phasen- und/oder Höhenverlaufsinformationen einer Objektbeschaffenheit. Dabei weist das reflexionsreduzierte Kontrastbildungsverfahren auf: Illuminieren 10 eines Objektes mittels einer Illuminationssequenz 11. Dabei erfolgt das Illuminieren 10 des Objektes mittels einer Vielzahl an Illuminationsquellen 111.

Und in der Illuminationssequenz 11 illuminiert jede Illuminationsquelle 111 das Objekt einzeln. Erstellen 20 eines Illuminationsbildes 21 des Objektes für jede Illumination des Objektes der Illuminationssequenz 11. Ermitteln 70 eines reflexionskorrigierten Illuminationsbildes 71 für jedes Illuminationsbild 21, jeweils mittels eines geeigneten Überlagerns 72 des entsprechenden Illuminationsbildes 21 mit einem bezüglich einer ersten Achse 35 benachbarten Illuminationsbildes 22 und mit einem bezüglich einer zweiten Achse 36 benachbarten weiteren Illuminationsbildes 22. Überlagern 30 jeweils zweier bezüglich der ersten Achse 35 benachbarter reflexionskorrigierter Illuminationsbilder 71 zu einem ersten Gesamtachsenbild 31 der ersten Achse 35. Überlagern 30 jeweils zweier bezüglich der zweiten Achse 36 benachbarter reflexionskorrigierter Illuminationsbilder 71 zu einem zweiten Gesamtachsenbild 32 der zweiten Achse 36. Erstellen 40 eines ersten Farbverlaufsbildes 41 basierend auf dem ersten Gesamtachsenbild 31. Erstellen 40 eines zweiten Farbverlaufsbildes 42 basierend auf dem zweiten Gesamtachsenbild 32. Transformieren 50 des ersten Farbverlaufsbildes 41 und des zweiten Farbverlaufsbildes 42 in einen Farbraum 51. Und generieren 60 eines Kontrastbildes 61, basierend auf dem transformierten 50 ersten Farbverlaufsbild 41 und dem zweiten Farbverlaufsbild 42 in den Farbraum 51 derart, dass vier Richtungsinformationen 351, 352, 361, 362 eines Höhenverlaufes einer Beschaffenheit des Objektes farbcodiert darstellbar sind.

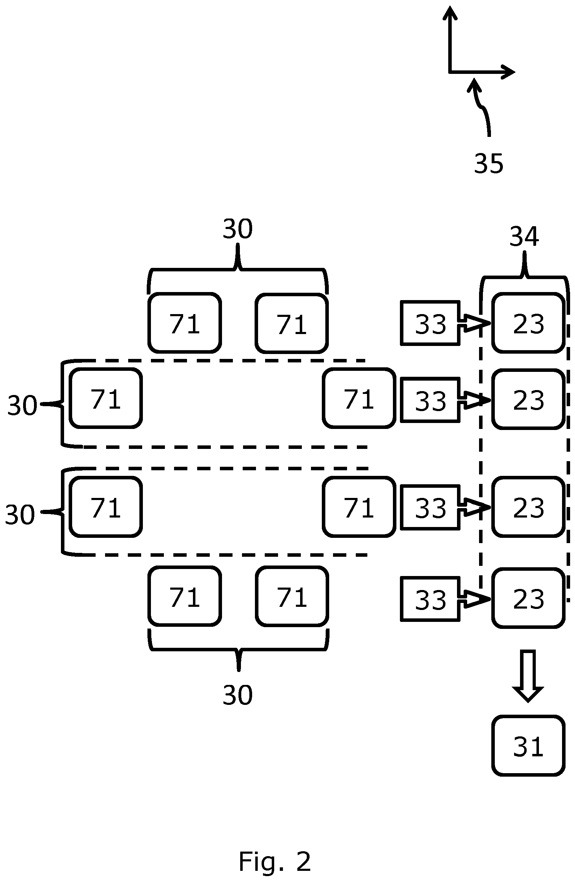

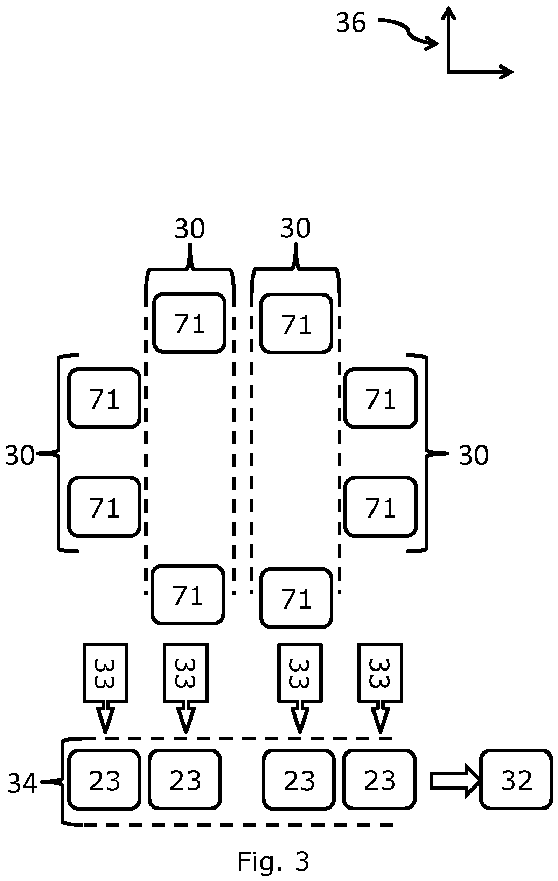

Fig. 2 und Fig. 3 zeigen jeweils eine schematische Darstellung eines Überlagerns benachbarter Illuminationsbilder zu einem Gesamtachsenbild gemäß einer weiteren beispielhaften Ausgestaltung der Erfindung.

Dabei zeigt Fig. 2 ein Überlagern 30 jeweils zweier bezüglich der ersten Achse 35 benachbarter reflexionskorrigierter Illuminationsbilder 71 zu dem ersten Gesamtachsenbild 31 der ersten Achse 35. Dabei erfolgt ein Verrechnen 33 jeweils zweier bezüglich der entsprechenden ersten Achse 35 benachbarter reflexionskorrigierter Illuminationsbilder 71 zu entsprechenden Zwischenbildern 23 bezüglich der entsprechenden ersten Achse 35. Ferner erfolgt ein Verrechnen 34 der entsprechenden Zwischenbilder 23 zu dem entsprechenden ersten Gesamtachsenbild 31.

Entsprechend zeigt Fig. 3 das Überlagern 30 jeweils zweier bezüglich der zweiten Achse 36 benachbarter reflexionskorrigierter Illuminationsbilder 71 zu dem zweiten Gesamtachsenbild 32 der zweiten Achse 36. Dabei erfolgt ein Verrechnen 33 jeweils zweier bezüglich der entsprechenden zweiten Achse 36 benachbarter reflexionskorrigierter Illuminationsbilder 71 zu entsprechenden Zwischenbildern 23 bezüglich der entsprechenden zweiten Achse 36. Ferner erfolgt ein Verrechnen 34 der entsprechenden Zwischenbilder 23 zu dem entsprechenden zweiten Gesamtachsenbild 32.

Das jeweilige Verrechnen 33, 34 weist dabei jeweils eine Addition oder eine Subtraktion auf.

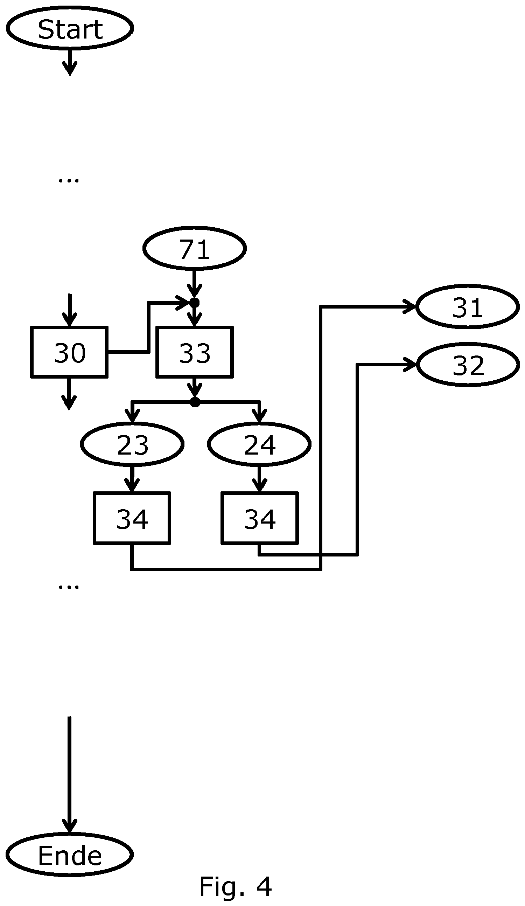

Fig. 4 zeigt eine schematische Darstellung eines vorgeschlagenen Verfahrens gemäß einer weiteren beispielhaften Ausgestaltung der Erfindung.

Dabei zeigt Fig. 4 eine schematische Darstellung eines gegenüber des Verfahrens der Fig. 1 erweiterten Verfahrens.

Das zuvor zu Fig. 1 Gesagte gilt entsprechend für Fig. 4 fort. Um die Übersichtlichkeit zu wahren, sind die dem Überlagern 30 von reflexionskorrigierten Illuminationsbildern vorhergehenden und nachfolgenden Verfahrensteile in Fig. 4 nicht dargestellt. Sie können hierzu jedoch der Fig. 1 entnommen werden.

Wie Fig. 4 entnommen werden kann, weist in dem reflexionsreduzierten Kontrastbildungsverfahren darüber hinaus das Überlagern 30 jeweils zweier bezüglich der ersten Achse 35 benachbarter reflexionskorrigierter Illuminationsbilder 71 zu dem ersten Gesamtachsenbild 31 der ersten Achse 35 (in Fig. 4 nicht dargestellt), und das Überlagern 30 jeweils zweier bezüglich der zweiten Achse 36 (in Fig. 4 nicht dargestellt) benachbarter reflexionskorrigierter Illuminationsbilder 71 zu dem zweiten Gesamtachsenbild 32 der zweiten Achse 36 jeweils entsprechend auf: Verrechnen 33 jeweils zweier bezüglich der entsprechenden ersten Achse 35 beziehungsweise zweiten Achse 36 benachbarter reflexionskorrigierter Illuminationsbilder 71 zu entsprechenden Zwischenbildern 23, 24 bezüglich der entsprechenden ersten Achse 35 beziehungsweise zweiten Achse 36. Und verrechnen 34 der entsprechenden Zwischenbilder 23, 24 zu einem entsprechenden ersten Gesamtachsenbild 31 beziehungsweise einem zweiten Gesamtachsenbild 32. Dabei weist das jeweilige Verrechnen 33, 34 eine Addition oder eine Subtraktion auf.

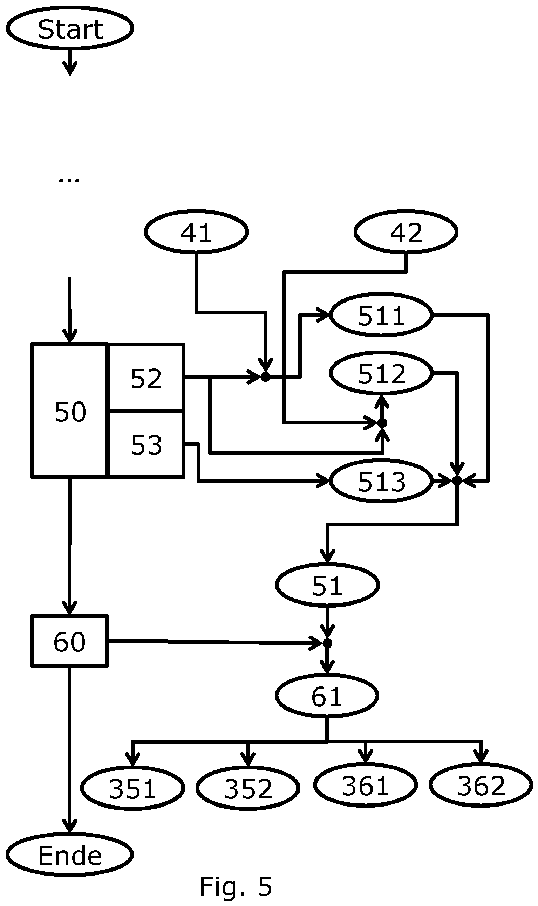

Fig. 5 zeigt eine schematische Darstellung eines vorgeschlagenen Verfahrens gemäß einer weiteren beispielhaften Ausgestaltung der Erfindung.

Dabei zeigt Fig. 5 eine schematische Darstellung eines gegenüber des Verfahrens der Fig. 1 und Fig. 4 erweiterten Verfahrens. Das zuvor zu Fig. 1 und Fig. 4 Gesagte gilt entsprechend für Fig. 5 fort. Um die Übersichtlichkeit zu wahren, sind die dem Transformieren 50 vorhergehenden Verfahrensteile in Fig. 5 nicht dargestellt. Sie können hierzu jedoch der Fig. 1 beziehungsweise der Fig. 4 entnommen werden. Wie Fig. 5 entnommen werden kann, weist in dem reflexionsreduzierten Kontrastbildungsverfahren darüber hinaus das Transformieren 50 des ersten Farbverlaufsbildes 41 und des zweiten Farbverlaufsbildes 42 in den Farbraum 51 auf: Zuweisen 52 des ersten Farbverlaufsbildes 41 zu einem ersten bildgebenden Kanal 511 des Farbraumes 51. Und ferner zuweisen 52 des zweiten Farbverlaufsbildes 42 zu einem zweiten bildgebenden Kanal 512 des Farbraumes 51.

Darüber hinaus weist in dem Beispiel der Fig. 4 das Transformieren 50 des ersten Farbverlaufsbildes 41 und des zweiten Farbverlaufsbildes 42 in den Farbraum 51, ein Zuweisen 53 einer zusätzlichen Information, wie beispielsweise eine Helligkeitsinformation und/oder ein Grauwertbild, zu einem dritten bildgebenden Kanal 513 des Farbraumes 51 auf.

Im Beispiel der Fig. 5 sind dabei zwei Richtungsinformationen 351, 352 der vier Richtungsinformationen 351, 352, 361, 362 indikativ, für jeweils eine Richtung entlang der ersten Achse 35 (in Fig. 5 nicht dargestellt), während zwei weitere Richtungsinformationen 361, 362 der vier Richtungsinformationen 351, 352, 361, 362 indikativ sind, für jeweils eine Richtung entlang der zweiten Achse 36 (in Fig. 5 nicht dargestellt).

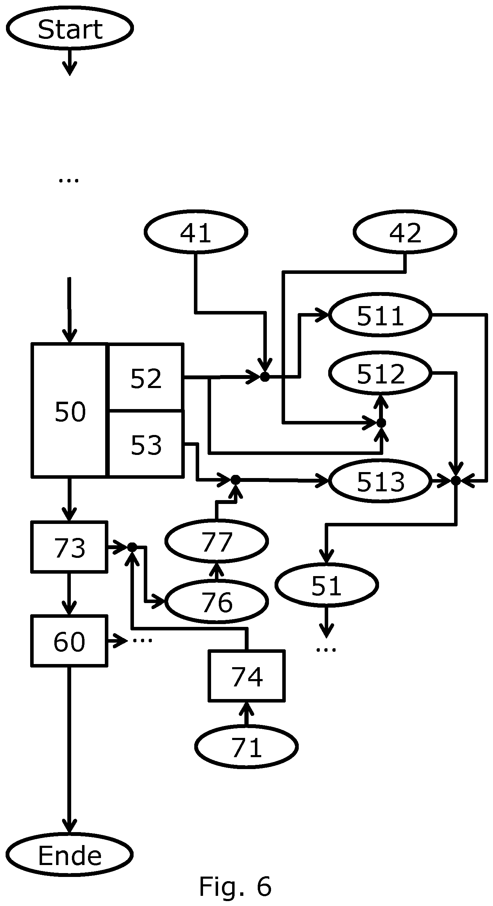

Fig. 6 zeigt eine schematische Darstellung eines vorgeschlagenen Verfahrens gemäß einer weiteren beispielhaften Ausgestaltung der Erfindung.

Dabei zeigt Fig. 6 eine schematische Darstellung eines gegenüber des Verfahrens der Fig. 1, Fig. 4 und Fig. 5 erweiterten Verfahrens. Das zuvor zu Fig. 1, Fig. 4 und Fig. 5 Gesagte gilt entsprechend für Fig. 6 fort. Um die Übersichtlichkeit zu wahren, sind die dem Transformieren 50 vorhergehenden Verfahrensteile in Fig. 6 nicht dargestellt. Sie können hierzu jedoch der Fig. 1, der Fig. 4 beziehungsweise der Fig. 5 entnommen werden.

Wie Fig. 6 entnommen werden kann, weist in dem reflexionsreduzierten Kontrastbildungsverfahren darüber hinaus das Transformieren 50 des ersten Farbverlaufsbildes 41 und des zweiten Farbverlaufsbildes 42 in den Farbraum 51 ein Zuweisen 53 eines Grauwertbildes 77 zu einem dritten bildgebenden Kanal 513 des Farbraumes 51 auf.

Ferner weist das reflexionsreduzierte Kontrastbildungsverfahren ein Ermitteln 73 eines reflexionskorrigierten Gesamtilluminationsbildes 76 auf, mittels eines geeigneten Überlagerns 74 zumindest eines überwiegenden Teiles der reflexionskorrigierten Illuminationsbilder 71. Und dabei basiert das Grauwertbild 77 auf einer Grauwerttransformation des reflexionskorrigierten Gesamtilluminationsbildes 76.

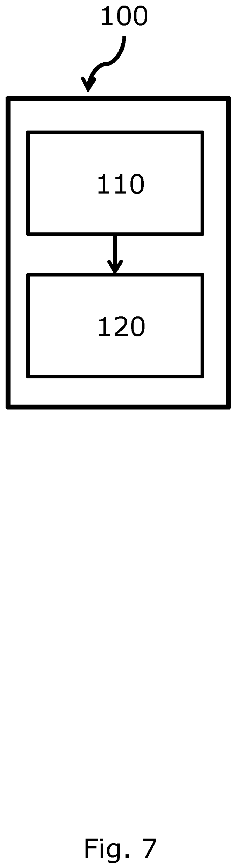

Fig. 7 zeigt eine schematische Darstellung einer vorgeschlagenen Vorrichtung gemäß einer weiteren beispielhaften Ausgestaltung der Erfindung.

Dabei zeigt Fig. 7 eine schematische Darstellung einer kontrastbildenden Vorrichtung 100 zur Generierung eines Kontrastbildes, vorzugsweise aus mikroskopischen Abbildungen, insbesondere zum Ablesen von Höhenverlaufsinformationen einer Objektbeschaffenheit, besonders bevorzugt zum Lichtmikroskopieren. Die kontrastbildende Vorrichtung 100 weist dabei auf: Eine Bildaufnahmevorrichtung 110 und eine Reflexionsreduzier-Kontrastbildungsvorrichtung 120. Die Bildaufnahmevorrichtung 110 ist dazu eingerichtet, ein Bild eines Objekt zu erfassen und an die Reflexionsreduzier-Kontrastbildungsvorrichtung 120 zu übermitteln. Dabei ist die kontrastbildende Vorrichtung 100 dazu eingerichtet, ein erfindungsgemäßes reflexionsreduziertes Kontrastbildungsverfahren auszuführen.

Bezugszeichenliste

| | |
|---|---|
| 10 | Illuminieren des Objektes |
| 11 | Illuminationssequenz |
| 20 | Erstellen eines Illuminationsbildes |
| 21 | Illuminationsbild |
| 22 | benachbartes Illuminationsbild |
| 23 | Zwischenbild bezüglich der ersten Achse |
| 24 | Zwischenbild bezüglich der zweiten Achse |
| 30 | Überlagern von zwei reflexionskorrigierten Illuminationsbildern |
| 31 | erstes Gesamtachsenbild |
| 32 | zweites Gesamtachsenbild |
| 33 | Verrechnen von zwei reflexionskorrigierten Illuminationsbildern zu einem Zwischenbild |
| 34 | Verrechnen von Zwischenbildern zu einem Gesamtachsenbild |
| 35 | erste Achse |
| 36 | zweite Achse |
| 40 | Erstellen eines Farbverlaufsbildes |
| 41 | erstes Farbverlaufsbild |
| 42 | zweites Farbverlaufsbild |
| 50 | Transformieren der Farbverlaufsbilder in einen Farbraum |
| 51 | Farbraum |
| 52 | Zuweisen eines Farbverlaufsbildes zu einem bildgebenden Kanal des Farbraumes |
| 53 | Zuweisen einer weiteren Information zu dem dritten bildgebenden Kanal des Farbraumes |
| 60 | Konstruieren eines Kontrastbildes |
| 61 | Kontrastbild |
| 70 | Ermitteln eines reflexionskorrigierten Illuminationsbildes für ein Illuminationsbild |
| 71 | reflexionskorrigiertes Illuminationsbild |
| 72 | Überlagern des entsprechenden Illuminationsbildes mit einem benachbarten Illuminationsbild |
| 73 | Ermitteln eines reflexionskorrigierten Gesamtilluminationsbildes |
| 74 | Überlagern zumindest eines überwiegenden Teiles der reflexionskorrigierten Illuminationsbilder |
| 76 | reflexionskorrigiertes Gesamtilluminationsbild |
| 77 | Grauwertbild |
| 100 | reflexionsreduzierend-kontrastbildende Vorrichtung |
| 110 | Bildaufnahmevorrichtung |
| 111 | Illuminationsquelle |
| 120 | Reflexionsreduzier-Kontrastbildungsvorrichtung |
| 351 | erste Richtungsinformation des Höhenverlaufes |
| 352 | zweite Richtungsinformation des Höhenverlaufes |
| 361 | dritte Richtungsinformation des Höhenverlaufes |
| 362 | vierte Richtungsinformation des Höhenverlaufes |
| 511 | erster bildgebender Kanal des Farbraumes |
| 512 | zweiter bildgebender Kanal des Farbraumes |
| 513 | dritter bildgebender Kanal des Farbraumes |

**Patentansprüche**

1. Reflexionsreduziertes Kontrastbildungsverfahren zum Generieren eines reflexionsreduzierten Kontrastbildes, vorzugsweise aus mikroskopischen Abbildungen, insbesondere zum Ablesen von Höhenverlaufsinformationen einer Objektbeschaffenheit, folgende Schritte in folgender Reihenfolge umfassend:

   - Illuminieren (10) eines Objektes mittels zwei oder mehr Illuminationsquellen (111), die in einer Illuminationssequenz (11) das Objekt jeweils einzeln illuminieren;
   - Erstellen (20) eines Illuminationsbildes (21) des Objektes für jede Illumination des Objektes der Illuminationssequenz (11);
   - Ermitteln (70) eines reflexionskorrigierten Illuminationsbildes (71) für jedes Illuminationsbild (21), jeweils mittels Überlagern (72) des entsprechenden Illuminationsbildes (21) mit einem bezüglich einer ersten Achse (35) benachbarten Illuminationsbild (22) und mit einem bezüglich einer zweiten Achse (36) benachbarten weiteren Illuminationsbild (22);

- Überlagern (30) jeweils zweier bezüglich der ersten Achse (35) benachbarter reflexionskorrigierter Illuminationsbilder (71) zu einem ersten Gesamtachsenbild (31) der ersten Achse (35);
- Überlagern (30) jeweils zweier bezüglich der zweiten Achse (36) benachbarter reflexionskorrigierter Illuminationsbilder (71) zu einem zweiten Gesamtachsenbild (32) der zweiten Achse (36);
- Erstellen (40) eines ersten Farbverlaufsbildes (41) basierend auf dem ersten Gesamtachsenbild (31);
- Erstellen (40) eines zweiten Farbverlaufsbildes (42) basierend auf dem zweiten Gesamtachsenbild (32);
- Transformieren (50) des ersten Farbverlaufsbildes (41) und des zweiten Farbverlaufsbildes (42) in einen Farbraum (51); und
- Generieren (60) eines Kontrastbildes (61), basierend auf dem transformierten (50) ersten Farbverlaufsbild (41) und dem zweiten Farbverlaufsbild (42) in den Farbraum (51) derart, dass vier Richtungsinformationen (351, 352, 361, 362) eines Höhenverlaufes einer Beschaffenheit des Objektes farbcodiert darstellbar sind.

2. Kontrastbildungsverfahren gemäß Anspruch 1, wobei das Überlagern (30) jeweils zweier bezüglich der ersten Achse (35) benachbarter reflexionskorrigierter Illuminationsbilder (71) zu dem ersten Gesamtachsenbild (31) der ersten Achse (35), und das Überlagern (30) jeweils zweier bezüglich der zweiten Achse (36) benachbarter reflexionskorrigierter Illuminationsbilder (71) zu dem zweiten Gesamtachsenbild (32) der zweiten Achse (36) jeweils entsprechend aufweist:

   - Verrechnen (33) jeweils zweier bezüglich der entsprechenden ersten Achse (35) beziehungsweise zweiten Achse (36) benachbarter reflexionskorrigierter Illuminationsbilder (71) zu entsprechenden Zwischenbildern (23, 24) bezüglich der entsprechenden ersten Achse (35) beziehungsweise zweiten Achse (36), und
   - Verrechnen (34) der entsprechenden Zwischenbilder (23, 24) zu einem entsprechenden ersten Gesamtachsenbild (31) beziehungsweise einem zweiten Gesamtachsenbild (32),
   wobei das jeweilige Verrechnen (33, 34) eine Addition oder eine Subtraktion aufweist.

3. Kontrastbildungsverfahren gemäß Anspruch 1 oder 2, wobei das Überlagern (30) der entsprechenden reflexionskorrigierten Illuminationsbilder (71) zu dem ersten Gesamtachsenbild (31) der ersten Achse (35) beziehungsweise zu dem zweiten Gesamtachsenbild (32) der zweiten Achse (36) jeweils eine entsprechende Graubildtransformation aufweist.

4. Kontrastbildungsverfahren gemäß irgendeinem der vorhergehenden Ansprüche, wobei das Transformieren (50) des ersten Farbverlaufsbildes (41) und des zweiten Farbverlaufsbildes (42) in den Farbraum (51) aufweist:

   - Zuweisen (52) des ersten Farbverlaufsbildes (41) zu einem ersten bildgebenden Kanal (511) des Farbraumes (51), und
   - Zuweisen (52) des zweiten Farbverlaufsbildes (42) zu einem zweiten bildgebenden Kanal (512) des Farbraumes (51) .

5. Kontrastbildungsverfahren gemäß irgendeinem der vorhergehenden Ansprüche, wobei das Transformieren (50) des ersten Farbverlaufsbildes (41) und des zweiten Farbverlaufsbildes (42) in den Farbraum (51) aufweist:

   - Zuweisen (53) einer Helligkeitsinformation zu einem dritten bildgebenden Kanal (513) des Farbraumes (51).

6. Kontrastbildungsverfahren gemäß irgendeinem der Ansprüche 1 bis 4, wobei das Transformieren (50) des ersten Farbverlaufsbildes (41) und des zweiten Farbverlaufsbildes (42) in den Farbraum (51) aufweist:

   - Zuweisen (53) eines Grauwertbildes (77) zu einem dritten bildgebenden Kanal (513) des Farbraumes (51).

7. Kontrastbildungsverfahren gemäß Anspruch 6, ferner aufweisend:

   - Ermitteln (73) eines reflexionskorrigierten Gesamtilluminationsbildes (76), mittels Überlagern (74) zumindest eines überwiegenden Teiles der reflexionskorrigierten Illuminationsbilder (71), und
   wobei das Grauwertbild (77) auf einer Grauwerttransformation des reflexionskorrigierten Gesamtilluminationsbildes (76) basiert.

8. Kontrastbildungsverfahren gemäß irgendeinem der vorhergehenden Ansprüche, wobei zwei Richtungsinformationen (351, 352) der vier Richtungsinformationen (351, 352, 361, 362) indikativ sind, für jeweils eine Richtung entlang der ersten Achse (35), und zwei weitere Richtungsinformationen (361, 362) der vier Richtungsinformationen (351, 352, 361, 362) indikativ sind, für jeweils eine Richtung entlang der zweiten Achse (36).

9. Kontrastbildungsverfahren gemäß irgendeinem der vorhergehenden Ansprüche, wobei der Farbraum (51) ein in der EN ISO 11664-4 vom 2008-11 definierter CIELAB Farbraum, ein additiver Farbraum, ein subtraktiver Farbraum oder ein Hue-Saturation Farbraum ist.

10. Kontrastbildungsverfahren gemäß irgendeinem der vorhergehenden Ansprüche, wobei das Konstruieren (60) des Kontrastbildes (61) in Abhängigkeit des Farbraumes (51) erfolgt.

11. Kontrastbildungsverfahren gemäß irgendeinem der vorhergehenden Ansprüche, wobei nach Abschluss der Illuminationssequenz (11) jede Illuminationsquelle (111) das Objekt einmal illuminiert hat.

12. Kontrastbildungsverfahren gemäß irgendeinem der vorhergehenden Ansprüche, wobei das Objekt ein diffus reflektierendes Objekt ist.

13. Reflexionsreduzierend-kontrastbildende Vorrichtung (100) zur Generierung eines Kontrastbildes, vorzugsweise aus mikroskopischen Abbildungen, insbesondere zum Ablesen von Höhenverlaufsinformationen einer Objektbeschaffenheit, besonders bevorzugt zum Lichtmikroskopieren, die reflexionsreduzierend-kontrastbildende Vorrichtung (100) aufweisend:

- eine Bildaufnahmevorrichtung (110), und
- - eine Reflexionsreduzier-Kontrastbildungsvorrichtung (120),
wobei die Bildaufnahmevorrichtung (110) dazu eingerichtet ist, ein Bild eines Objektes zu erfassen und an die Reflexionsreduzier-Kontrastbildungsvorrichtung (120) zu übermitteln, wobei die reflexionsreduzierend-kontrastbildende Vorrichtung (100) dazu konfiguriert ist, ein Kontrastbildungsverfahren gemäß irgendeinem der vorhergehenden Ansprüche auszuführen.

14. Computerprogrammprodukt für eine reflexionsreduzierend-kontrastbildende Vorrichtung (100) gemäß Anspruch 13, umfassend Programmcodemittel, welche ein reflexionsreduziertes Kontrastbildungsverfahren gemäß irgendeinem der Ansprüche 1 bis 12 ausführt.

15. Datenträger aufweisend ein Computerprogrammprodukt gemäß Anspruch 14.


**Claims**

1. Reflection-reduced contrast formation method for generating a reflection-reduced contrast image, preferably from microscopic images, in particular for reading height profile information of an object property, comprising the following steps in the following order:

- illuminating (10) an object by way of two or more illumination sources (111) that each individually illuminate the object in an illumination sequence (11);
- creating (20) an illumination image (21) of the object for each illumination of the object of the illumination sequence (11);
- ascertaining (70) a reflection-corrected illumination image (71) for each illumination image (21), in each case by superposing (72) the corresponding illumination image (21) with an illumination image (22) that is adjacent with respect to a first axis (35) and with a further illumination image (22) that is adjacent with respect to a second axis (36);
- superposing (30) in each case two reflection-corrected illumination images (71) that are adjacent with respect to the first axis (35) to form a first total axis image (31) of the first axis (35);
- superposing (30) in each case two reflection-corrected illumination images (71) that are adjacent with respect to the second axis (36) to form a second total axis image (32) of the second axis (36);
- creating (40) a first colour gradient image (41) based on the first total axis image (31);
- creating (40) a second colour gradient image (42) based on the second total axis image (32);
- transforming (50) the first colour gradient image (41) and the second colour gradient image (42) into a colour space (51); and
- generating (60) a contrast image (61) based on the transformed (50) first colour gradient image (41) and the second colour gradient image (42) into the colour space (51) such that four pieces of direction information (351, 352, 361, 362) of a height profile of a property of the object are representable in colour-coded fashion.

2. Contrast formation method according to Claim 1, wherein the superposing (30) of in each case two reflection-corrected illumination images (71) that are adjacent with respect to the first axis (35) to form the first total axis image (31) of the first axis (35) and the superposing (30) of in each case two reflection-corrected illumination images (71) that are adjacent with respect to the second axis (36) to form the second total axis image (32) of the second axis (36) in each case correspondingly include:

- including in each case two reflection-corrected illumination images (71) that are adjacent with respect to the corresponding first axis (35) and second axis (36), respectively, in a calculation (33) to form corresponding intermediate images (23, 24) with respect to the corresponding first axis (35) and second axis (36), respectively; and
- including the corresponding intermediate images (23, 24) in a calculation (34) to form a corresponding first total axis image (31) and a second total axis image (32), respectively,
wherein the respective calculation (33, 34) includes an addition or a subtraction.

3. Contrast formation method according to Claim 1 or 2, wherein the superposing (30) of the corresponding reflection-corrected illumination images (71) to form the first total axis image (31) of the first axis (35) and to form the second total axis image (32) of the second axis (36) in each case includes a corresponding piece of grey level transformation.

4. Contrast formation method according to any one of the preceding claims, wherein the transforming (50) of the first colour gradient image (41) and the second colour gradient image (42) into the colour space (51) includes:

- allocating (52) the first colour gradient image (41) to a first imaging channel (511) of the colour space (51), and
- allocating (52) the second colour gradient image (42) to a second imaging channel (512) of the colour space (51) .

5. Contrast formation method according to any one of the preceding claims, wherein the transforming (50) of the first colour gradient image (41) and the second colour gradient image (42) into the colour space (51) includes:

- allocating (53) a piece of brightness information to a third imaging channel (513) of the colour space (51).

6. Contrast formation method according to any one of Claims 1 to 4, wherein the transforming (50) of the first colour gradient image (41) and the second colour gradient image (42) into the colour space (51) includes:

- allocating (53) a grey-value image (77) to a third imaging channel (513) of the colour space (51).

7. Contrast formation method according to Claim 6, further including:

- ascertaining (73) a reflection-corrected total illumination image (76) by way of superposing (74) at least a predominant part of the reflection-corrected illumination images (71), and
wherein the grey-value image (77) is based on a grey value transformation of the reflection-corrected total illumination image (76).

8. Contrast formation method according to any one of the preceding claims, wherein two pieces of direction information (351, 352) of the four pieces of direction information (351, 352, 361, 362) are indicative of in each case one direction along the first axis (35) and two further pieces of direction information (361, 362) of the four pieces of direction information (351, 352, 361, 362) are indicative of in each case one direction along the second axis (36).

9. Contrast formation method according to any one of the preceding claims, wherein the colour space (51) is a CIELAB colour space defined in EN ISO 11664-4 of 2008-11, an additive colour space, a subtractive colour space or a hue-saturation colour space.

10. Contrast formation method according to any one of the preceding claims, wherein the constructing (60) of the contrast image (61) is performed in dependence on the colour space (51).

**11.** Contrast formation method according to any one of the preceding claims, wherein after completion of the illumination sequence (11), each illumination source (111) has illuminated the object once.

**12.** Contrast formation method according to any one of the preceding claims, wherein the object is a diffusely reflecting object.

**13.** Apparatus (100) for forming a contrast in a reflection-reducing manner, for generating a contrast image, preferably from microscopic images, in particular for reading height profile information of an object property, particularly preferably for light microscopy, the apparatus (100) for forming a contrast in a reflection-reducing manner including:

- an image recording apparatus (110); and
- a reflection-reducing contrast formation apparatus (120),
wherein the image recording apparatus (110) is set up to capture an image of an object and to transmit it to the reflection-reducing contrast formation apparatus (120), wherein the apparatus (100) for forming a contrast in a reflection-reducing manner is configured for performing a contrast formation method according to any one of the preceding claims.

**14.** Computer program product for an apparatus (100) for forming a contrast in a reflection-reducing manner according to Claim 13, comprising program code means, which performs a reflection-reduced contrast formation method according to any one of Claims 1 to 12.

**15.** Data carrier, including a computer program product according to Claim 14.

**Revendications**

**1.** Procédé de formation de contraste à réflexion réduite destiné à générer une image contrastée à réflexion réduite, de préférence à partir de représentations microscopiques, notamment pour la lecture d'informations de tracé de hauteur de la constitution d'un objet, comprenant les étapes suivantes dans l'ordre ci-après :

- illumination (10) d'un objet au moyen de deux sources d'illumination (111) ou plus, lesquelles illuminent l'objet respectivement individuellement dans une séquence d'illumination (11) ;
- création (20) d'une image d'illumination (21) de l'objet pour chaque illumination de l'objet de la séquence d'illumination (11) ;
- détermination (70) d'une image d'illumination (71) à réflexion corrigée pour chaque image d'illumination (21), respectivement au moyen d'une superposition (72) de l'image d'illumination (21) correspondante avec une image d'illumination (22) voisine en référence à un premier axe (35) et avec une image d'illumination (22) supplémentaire voisine en référence à un deuxième axe (36) ;
- superposition (30) respectivement de deux images d'illumination à réflexion corrigée (71) voisines en référence au premier axe (35) en vue d'obtenir une première image d'axe globale (31) du premier axe (35) ;
- superposition (30) respectivement de deux images d'illumination à réflexion corrigée (71) voisines en référence au deuxième axe (36) en vue d'obtenir une deuxième image d'axe globale (32) du deuxième axe (36) ;
- création (40) d'une première image de tracé de couleur (41) en se basant sur la première image d'axe globale (31) ;
- création (40) d'une deuxième image de tracé de couleur (42) en se basant sur la deuxième image d'axe globale (32) ;
- transformation (50) de la première image de tracé de couleur (41) et de la deuxième image de tracé de couleur (42) dans un espace colorimétrique (51) ; et
- génération (60) d'une image contrastée (61) en se basant sur la première image de tracé de couleur (41) et la deuxième image de tracé de couleur (42) transformées (50) dans l'espace colorimétrique (51) de telle sorte que quatre informations de direction (351, 352, 361, 362) d'un tracé de hauteur d'une constitution de l'objet peuvent être représentées avec codage en couleur.

**2.** Procédé de formation de contraste selon la revendication 1, la superposition (30) respectivement de deux images d'illumination à réflexion corrigée (71) voisines en référence au premier axe (35) en vue d'obtenir la première image d'axe globale (31) du premier axe (35) et la superposition (30) respectivement de deux images d'illumination à réflexion corrigée (71) voisines en référence au deuxième axe (36) en vue d'obtenir la deuxième image d'axe globale (32) du deuxième axe (36) comprenant respectivement en conséquence :

- le calcul de conversion (33) respectivement de deux images d'illumination à réflexion corrigée (71) voisines en référence au premier axe (35) ou en référence au deuxième axe (36) correspondant en vue d'obtenir des images intermédiaires (23, 24) correspondantes en référence au premier axe (35) ou au deuxième axe (36), et
- le calcul de conversion (34) des images intermédiaires (23, 24) correspondantes en vue d'obtenir une première image d'axe globale (31) ou une deuxième image d'axe globale (32) correspondante,
le calcul de conversion (33, 34) respectif comprenant une addition ou une soustraction.

3. Procédé de formation de contraste selon la revendication 1 ou 2, la superposition (30) des images d'illumination à réflexion corrigée (71) correspondantes en vue d'obtenir la première image d'axe globale (31) du premier axe (35) ou la deuxième image d'axe globale (32) du deuxième axe (36) comprenant respectivement une transformation en image en noir et blanc correspondante.

4. Procédé de formation de contraste selon l'une quelconque des revendications précédentes, la transformation (50) de la première image de tracé de couleur (41) et de la deuxième image de tracé de couleur (42) dans l'espace colorimétrique (51) comprenant :

   - l'affectation (52) de la première image de tracé de couleur (41) à un premier canal d'imagerie (511) de l'espace colorimétrique (51), et
   - l'affectation (52) de la deuxième image de tracé de couleur (42) à un deuxième canal d'imagerie (512) de l'espace colorimétrique (51).

5. Procédé de formation de contraste selon l'une quelconque des revendications précédentes, la transformation (50) de la première image de tracé de couleur (41) et de la deuxième image de tracé de couleur (42) dans l'espace colorimétrique (51) comprenant :

   - l'affectation (53) d'une information de luminosité à un troisième canal d'imagerie (513) de l'espace colorimétrique (51).

6. Procédé de formation de contraste selon l'une quelconque des revendications 1 à 4, la transformation (50) de la première image de tracé de couleur (41) et de la deuxième image de tracé de couleur (42) dans l'espace colorimétrique (51) comprenant :

   - l'affectation (53) d'une image à niveaux de gris (77) à un troisième canal d'imagerie (513) de l'espace colorimétrique (51).

7. Procédé de formation de contraste selon la revendication 6, comprenant en outre :

   - la détermination (73) d'une image d'illumination globale (76) à réflexion corrigée par superposition (74) d'au moins une partie principale de l'image d'illumination (71) à réflexion corrigée et
   l'image à niveaux de gris (77) se basant sur une transformation en niveaux de gris de l'image d'illumination globale (76) à réflexion corrigée.

8. Procédé de formation de contraste selon l'une quelconque des revendications précédentes, deux informations de direction (351, 352) des quatre informations de direction (351, 352, 361, 362) étant indicatives respectivement d'une direction le long du premier axe (35) et deux autres informations de direction (361, 362) des quatre informations de direction (351, 352, 361, 362) étant indicatives respectivement d'une direction le long du deuxième axe (36).

9. Procédé de formation de contraste selon l'une quelconque des revendications précédentes, l'espace colorimétrique (51) étant un espace colorimétrique CIELAB défini dans l'EN ISO 11664-4 de 2008-11, un espace colorimétrique additif, un espace colorimétrique soustractif ou un espace colorimétrique à saturation de teinte.

10. Procédé de formation de contraste selon l'une quelconque des revendications précédentes, la construction (60) de l'image contrastée (61) étant effectuée en fonction de l'espace colorimétrique (51).

11. Procédé de formation de contraste selon l'une quelconque des revendications précédentes, chaque source d'illumination (111) ayant illuminé l'objet une fois après la fin de la séquence d'illumination (11).

12. Procédé de formation de contraste selon l'une quelconque des revendications précédentes, l'objet étant un objet à réflexion diffuse.

**13.** Dispositif (100) de formation de contraste à réflexion réduite destiné à générer une image contrastée, de préférence à partir de représentations microscopiques, notamment pour la lecture d'informations de tracé de hauteur de la constitution d'un objet, notamment de préférence destiné à la microscopie optique, le dispositif (100) de formation de contraste à réflexion réduite comprenant :

- un dispositif d'enregistrement d'images (110) et
- un dispositif formateur de contraste à réflexion réduite (120),

le dispositif d'enregistrement d'images (110) étant conçu pour acquérir une image d'un objet et la communiquer au dispositif formateur de contraste à réflexion réduite (120), le dispositif (100) de formation de contraste à réflexion réduite étant configuré pour mettre en œuvre un procédé de formation de contraste selon l'une quelconque des revendications précédentes.

**14.** Produit de programme informatique pour un dispositif (100) de formation de contraste à réflexion réduite selon la revendication 13, comprenant des moyens de code de programme qui mettent en œuvre un procédé de formation de contraste à réflexion réduite selon l'une quelconque des revendications 1 à 12.

**15.** Support de données comprenant un produit de programme informatique selon la revendication 14.

Fig. 1

Fig. 2

36

30　　　30

71　　71

71　　　　　71

30　　　　　　30

71　　71

71　　71

33　33　　33　33

34　23　23　　23　23　　32

Fig. 3

Start

...

71

30    33

31

32

23    24

34    34

...

Ende

Fig. 4

Fig. 5

Fig. 6

100

110

120

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014002723 A1
- US 7136537 B
- WO 2015012279 A1
- US 2015065877 A1